# EUROPÄISCHE PATENTSCHRIFT

(11) **EP 1 958 840 B1**
(45) Veröffentlichungstag und Bekanntmachung des Hinweises auf die Patenterteilung: **17.03.2010**
(21) Anmeldenummer: 08100231.3
(22) Anmeldetag: 09.01.2008
(51) Int. Cl.: B60W 30/08

(54) **Lückenmelder für den Spurwechsel eines Kraftfahrzeugs auf einer mehrspurigen Straße**
Gap indicator for an automobile changing lanes on a multi-lane street
Dispositif de signalisation de place disponible pour un changement de voie de circulation d'un véhicule automobile sur une route à plusieurs voies

(30) Priorität: 15.02.2007 DE 102007007507
(43) Veröffentlichungstag der Anmeldung: 20.08.2008
(73) Patentinhaber: ROBERT BOSCH GMBH, 70442 Stuttgart (DE)
(72) Erfinder: Placke, Lars, 30163 Hannover (DE); Biester, Lars, 96047 Bamberg (DE)

(56) Entgegenhaltungen:
- WO-A-03/080390
- DE-A1-102006 000 326
- DE-C1- 4 313 568
- US-A1- 2005 015 203

## Beschreibung

### Stand der Technik

Die Erfindung geht aus von der Gattung, wie sie im unabhängigen Patentanspruch 1 wiedergegeben ist.

Beim heutigen Stand der Technik wird dem Fahrer keinerlei Unterstützung bei der Beobachtung des rückwärtigen Verkehrs geboten. Es befinden sich jedoch Produkte in der Markteinführung wie Blind Spot Detection und sogenannte Spurwechselassistenten. Bei der Blind Spot Detection wird jedoch lediglich über eine Art rote Iris im Außenspiegel angezeigt, ob sich ein Fahrzeug im toten Winkel befindet. Beim Spurwechselassistenten wird in dem Moment, in dem der Fahrer den Spurwechsel signalisiert oder einleitet, überprüft, ob sich auf der Nebenspur ein Fahrzeug befindet oder nähert und ob dies zu einer kritischen Situation führen könnte.

Bei einem bekannten Spurwechselassistenten wird der Überholwunsch des Fahrers registriert und berücksichtigt, doch erfolgt die Einleitung des Beschleunigungsvorgangs erst zu einem späteren Zeitpunkt, nämlich dann, wenn sich das überholende Fahrzeug mit einem ausreichenden Sicherheitsabstand entfernt hat. Falls diesem überholenden Fahrzeug auf der Nebenspur noch ein weiteres Fahrzeug folgt, und die Lücke zwischen diesen Fahrzeugen zu klein ist, wird der Beschleunigungsvorgang weiter ausgesetzt, bis auch das zweite Fahrzeug seinen Überholvorgang abgeschlossen hat. Auf diese Weise erhält der Fahrer eine sehr wirksame Unterstützung bei der Entscheidung, ob und wann ein gefahrloser Spurwechsel möglich ist.

Der bekannte Spurwechselassistent berücksichtigt jedoch nur die momentane Verkehrssituation und schaut nicht in die Zukunft. Er kann daher bei dichtem Verkehr dem Fahrer keine frühzeitige Information liefern, wann voraussichtlich ein gefahrloser Spurwechsel möglich ist.

Aus der DE 43 13 568 C1 ist ein Lückenmelder für den Spurwechsel eines Kraftfahrzeugs auf einer mehrspurigen Straße bekannt, mit einer Umfeldsensorik zur Erfassung des Verkehrsumfelds einschließlich des Verkehrs auf wenigstens einer Nebenspur, einer Erkennungseinrichtung zur Bestimmung von für den Spurwechsel ausreichender Verkehrslücken, wobei die Umfeldsensorik einen Entfernungsmesser, einen Längenmesser und einen Geschwindigkeitsmesser für sämtliche innerhalb eines begrenzten Abstandsbereichs ausgehend vom eigenen Kraftfahrzeug erfasste rückwärtige und seitliche fremde Kraftfahrzeuge auf der wenigstens einen Nebenspur umfasst, wobei die Erkennungseinrichtung durch Vergleich von Parametern der eigenen Geschwindigkeit sowie der Geschwindigkeiten der fremden Fahrzeuge und deren Entfernungen vom eigenen Kraftfahrzeug mit Sollwerten aus der Menge Geschwindigkeit, Beschleunigungsvermögen, Fahrerreaktionszeit, Lückengröße vorausschauend eine für den Spurwechsel kommende ausreichende Lücke ermittelt und mittels einer Steuereinrichtung Beschleunigungsbefehle an den Motor oder Verzögerungsbefehle an die Bremsanlage oder mittels einer Dialogeinrichtung detaillierte Fahrhinweise an den Fahrer des eigenen Kraftfahrzeugs ausgibt.

### Vorteile der Erfindung

Die Erfindung mit den in Anspruch 1 angegebenen Merkmalen bietet den Vorteil, das gesamte Verkehrsgeschehen innerhalb eines begrenzten Abstandsbereichs ausgehend vom eigenen Kraftfahrzeug zu analysieren und dem Fahrer frühzeitig Hinweise auf eine demnächst kommende Lücke für einen Spurwechsel oder einen Überholvorgang zu geben oder rechtzeitig automatisch Aktionen einzuleiten. Ein frühzeitiger Fahrhinweis bei dichtem Verkehr könnte z. B. lauten: "Noch Fahrzeuge passieren lassen, dann Spurwechsel möglich."

Ferner kann die Umfeldsensorik als zusätzlich Parameter die Farben, Höhen und Längen der Kraftfahrzeuge an die Erkennungseinrichtung übermitteln und die Erkennungseinrichtung diese Parameter zur Klassifizierung der fremden Fahrzeuge ebenfalls auswerte. Mittels der Dialogeinrichtung werden dann zusammen mit den Fahrhinweisen Klassifizierungungsangaben der fremden Fahrzeuge als Identifizierungshilfe an den Fahrer des eigenen Kraftfahrzeugs ausgegeben.

Ein frühzeitiger Fahrhinweis bei dichtem Verkehr könnte dann lauten: "Noch Fahrzeuge passieren lassen, nach dem roten PKW Spurwechsel möglich."

Vorteilhafte Ausgestaltungen und Weiterbildungen der Erfindung sind in den Unteransprüchen angegeben.

Ferner kann die Umfeldsensorik als zusätzlicher Parameter die Geschwindigkeit eines vorausfahrenden fremden Kraftfahrzeugs und dessen Entfernung vom eigenen Kraftfahrzeug an die Erkennungseinrichtung übermitteln und die Erkennungseinrichtung diese Parameter ebenfalls auswerten.

Ein Fahrhinweis könnte dann lauten: "Ein Spurwechsel ist noch nicht möglich. Bitte bremsen" oder "Ein Spurwechsel ist nach dem nächsten blauen Pkw möglich. Bitte jetzt beschleunigen"

Weiter kann eine zusätzliche Umweltsensorik Parameter aus der Menge Temperatur, Niederschlag, Fahrbahnbelag an die Erkennungseinrichtung übermitteln und die Erkennungseinrichtung diese Parameter ebenfalls auswerten.

Auf diese Weise lässt sich berücksichtigen, ob der Straßenzustand maximale Lenkbewegungen, Beschleunigungs- und Bremsvorgänge zulässt, die kleinere Lücken für einen Spurwechsel ermöglichen, oder ob der Straßenzustand nur eingeschränkte Lenkbewegungen, Beschleunigungs- und Bremsvorgänge zulässt, die große Lücken für einen Spurwechsel erfordern.

Gemäß einer Weiterbildung kann die Erkennungseinrichtung aus kontinuierlich ausgewerteten Parametern aus der Menge eigene Geschwindigkeit, Geschwindigkeit der fremden Kraftfahrzeuge und deren Entfernung vom eigenen Kraftfahrzeug, Geschwindigkeit eines vorausfahrenden fremden Kraftfahrzeugs und dessen Entfernung vom eigenen Kraftfahrzeug, Temperatur, Niederschlag, Fahrbahnbelag, eigenes bisheriges Beschleunigungs- und Bremsverhalten eine Vorausberechnung künftiger Lücken vornehmen.

In diesem Fall werden in nicht nur die vor einem Spurwechsel vorhandenen Lücken ermittelt, sondern durch Analyse von historischen Daten auch die dynamische Veränderungen der Fahrzeugabstände auf Grund unterschiedlicher Geschwindigkeiten und Beschleunigungsfähigkeiten abgeschätzt und diese Schätzwerte mit in die Vorausberechnung künftiger Lücken einbezogen.

Mittels der Dialogeinrichtung können auch Steuerbefehle zur manuellen oder selbstlernenden automatischen Änderung wenigstens eines Sollwertes eigenständig oder im Dialog mit automatisch erzeugten Vorgaben eingebbar sein.

Der Fahrer hat so die Möglichkeit, die Eigenschaften des Lückenmelders seinem persönlichen Fahrstil oder auch seiner Selbsteinschätzung, schnell oder langsam reagieren zu können, anzupassen.

Die Dialogeinrichtung kann durch eine automatisch erkannte Fahraktion aus der Menge Blinker betätigen, Beschleunigen, Bremsen, Annäherung an ein vorausfahrendes Kraftfahrzeug aktivierbar sein.

Dadurch wird erreicht, dass Fahrhinweise nur dann ausgegeben werden, wenn ein Spurwechsel auf Grund des Fahrverhaltens angezeigt ist und nicht bei jeder Gelegenheit, die sich theoretisch bietet.

Die Kombination einzelner oder mehrerer der erfindungsgemäßen Merkmale ermöglicht eine optimale Auslegung des gesamten Systemverhaltens. Der Lückenmelder kann auch mit mehreren Systemen kooperieren, indem er die Daten aus weiteren Systemen wie Blind Spot Detection sowie anderen Assistentssystemen und Sensoren fusioniert und unter anderem auf ein Nutzerprofil des jeweiligen Fahrers zurückgreift. Dieses kann an der Schnittstelle aller Reglereingaben abgelegt werden. In dem Nutzerprofil können Daten über die bisherigen Einstellungen des Fahrers an allen Teilsystemen in Verbindung mit weiteren relevanten Daten wie Außentemperatur, Straßenbeschaffenheit etc. gespeichert sein.

Es besteht ferner die Möglichkeit über ein Menü zwischen den Varianten zu wählen. Diese Wahlmöglichkeit obliegt in erster Linie dem Fahrer, kann jedoch bei gewissen Situationen, z. B. hohe Belastung des Fahrers, vom System adaptiv vorgenommen werden, wenn dies der Sicherheit dient. Auf Basis der oben abgeführten Daten kann das System selbstständig Einstellungsänderungen vorschlagen oder direkt vornehmen. Das System kann die Empfehlungen dann ausgeben, wenn der Fahrer einen Überholvorgang signalisiert. Alternativ kann das System auch selbstständig Empfehlungen generieren, wenn es durch Zugriff auf eine andere Sensorik z. B. Abstandsregelung einen kommenden Überholvorgang ableitet.

Der Fahrer kann die Systemvorgaben jedoch selbstständig ändern. Der Fahrer hat immer die Gelegenheit das Systemverhalten in Teilen zu verändern. So hat er zum Beispiel die Möglichkeit, die Variante der vollautomatischen Einstellungen abzuschalten. In der kooperativen Systemauslegung erfolgt die Einstellungsänderung erst nach einem gemeinsamen Aushandeln dieser Änderung zwischen System und Mensch. Dabei reagiert der Mensch auf Vorschläge des Systems, die solange systemseitig angepasst werden, bis eine Einigung erzielt wurde. In dieser Variante kann die eigentliche Änderung der Einstellung auch über den Menschen erfolgen. Der kooperative Lückenmelder dient dann lediglich dazu, die optimale Lücke vorzuschlagen bzw. auszuhandeln.

Die erfindungsgemäßen Merkmale führen auch zu einem energiesparenden optimierten Fahren des eigenen Fahrzeugs und zu flüssigerem Fahren des Gesamtverkehrs.

### Zeichnung

Ein Ausführungsbeispiel der Erfindung ist in der Zeichnung dargestellt und in der nachfolgenden Beschreibung näher erläutert.

Die beigefügte Zeichnung zeigt in
- Fig. 1: ein Blockdiagramm der Erfindung und
- Fig. 2: eine Darstellung einer Verkehrssituation auf einer mehrspurigen Strasse.

### Beschreibung des Ausführungsbeispiels

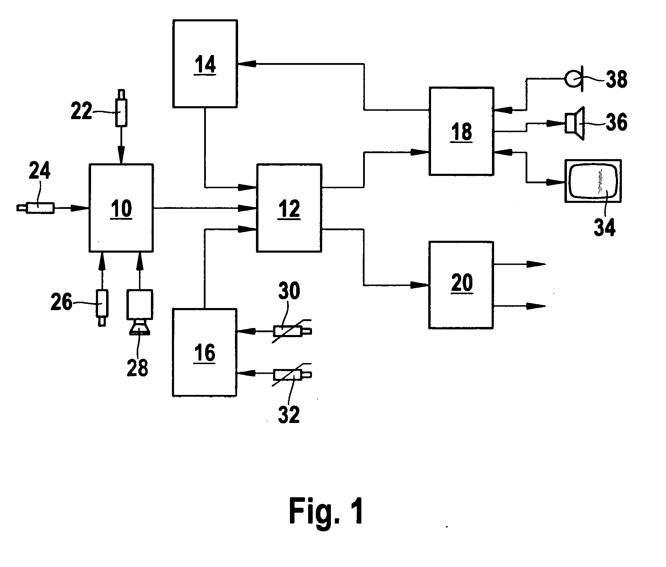

Fig. 1 zeigt ein Blockdiagramm der Erfindung, mit einer Umfeldsensorik 10, einer Erkennungseinrichtung 12, einem Sollwertspeicher 14, einer Dialogeinrichtung 18, einer Steuereinrichtung 20 und einer Umweltsensorik 16. Die Umfeldsensorik 10 umfasst Radarsensoren 22, 24, 26 zur dynamischen Entfernungsmessung, wobei aus der Entfernung und der Zeit die Geschwindigkeiten und Beschleunigungsvorgänge der fremden Kraftfahrzeuge oder in Verbindung mit der eigenen Geschwindigkeit die Relativgeschwindigkeiten der fremden Fahrzeuge errechnet werden können. Darüber hinaus kann die Umweltsensorik 10 auch eine Videokamera 28 zur Erfassung von Höhe und Länge der Kraftfahrzeuge in Verbindung mit den von den Radarsensoren 26 ermittelten Entfernungen sowie zur Erfassung der Farbe beinhalten.

Im Sollwertspeicher 14 sind Sollwerte aus der Menge Geschwindigkeit, Beschleunigungsvermögen, Fahrerreaktionszeit, Lückengröße gespeichert. Ferner können auch Nutzerprofile gespeichert sein. Eine Umweltsensorik 16 erfasst über Sensoren 30, 32 Parameter aus der Menge Temperatur, Niederschlag, und Fahrbahnbelag.

Mittels der Erkennungseinrichtung 12 werden von der Umfeldsensorik 10 und der Umfeldsensorik 16 übermittelte Parameter mit Sollwerten aus dem Sollwertspeicher 14 verglichen. Die Erkennungseinrichtung 12 erzeugt durch Auswertung der Parameter und Vergleich mit den Sollwerten Steuersignale, die an eine Dialogeinrichtung 18 oder eine Steuereinrichtung 20 übermittelt werden. Die Dialogeinrichtung 18 umfasst einen kombinierten Aus- und Eingabebildschirm 34, ein Mikrofon 38 und einen Lautsprecher 36. Dadurch können dem Fahrer visuelle und akustische Fahrhinweise übermittelt werden als auch manuelle oder akustische Eingabebefehle empfangen werden. Mit den Eingabebefehlen können Sollwerte im Sollwertspeicher 14 verändert werden und auch Nutzerprofile ausgewählt werden.

Mittels der Steuereinrichtung 20 können auch Fahrzeugsysteme beeinflusst werden, z. B. Beschleunigungsbefehle an das Antriebssystem oder Bremsbefehle an das Bremssystem übermittelt werden.

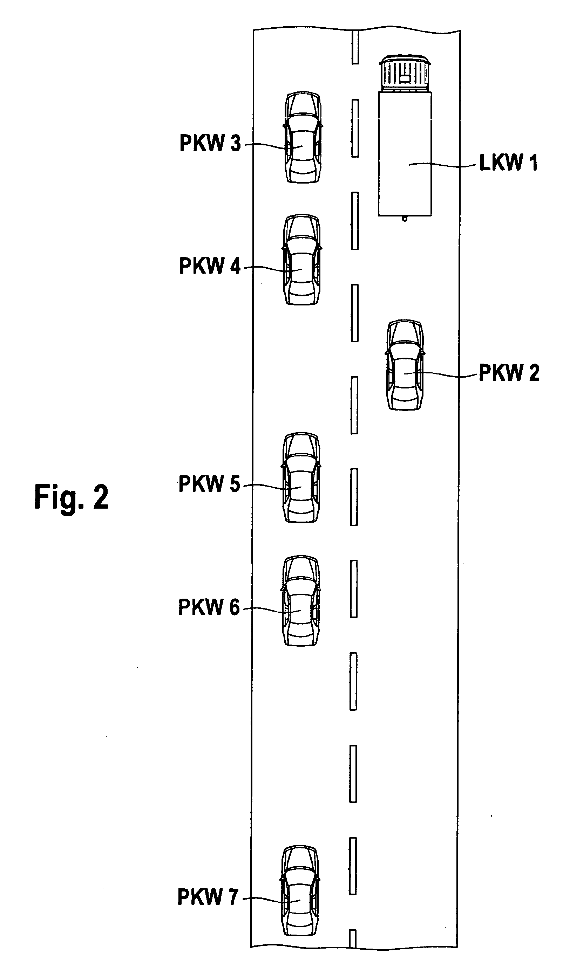

An Hand einer in Fig. 2 gezeigten Darstellung einer Verkehrssituation auf einer mehrspurigen Straße wird die Funktion des Lückenmelders beschrieben. Um den langsamer fahrenden LKW 1 mit den nötigen Abständen überholen zu können, braucht der PKW 2 eine ausreichend große Lücke zwischen den PKW 3 - 7. Diese ist nicht schon zwischen PKW 4 und 5, sondern erst zwischen PKW 6 und 7 vorhanden. Das Nehmen der ersten Lücke würde zu einer gefährlichen Situation für den rückwärtigen Verkehr führen.

Die Umfeldsensorik 10 erfasst Entfernungen sämtlicher Fahrzeuge im in Figur 2 dargestellten Abstandsbereich vom eigenen PKW 2 und berechnet in Verbindung mit der eigenen Geschwindigkeit die Relativgeschwindigkeit zum vorausfahrenden Lkw 1 sowie zu den auf der Nebenspur befindlichen PKW 3 bis 7. Aus den Entfernungen ergeben sich die relativen Abstände zwischen den PKW 3 bis 7.

Im Sollwertspeicher sind Daten abgelegt, die entsprechend der eigenen Geschwindigkeit eine den Verkehrsvorschriften genügende Mindestlücke für einen ungefährlichen Spurwechsel des PKW 2 ermöglicht. Das Ergebnis des Vergleichs ergibt, dass eine ausreichende Lücke erst zwischen den PKW 6 und 7 besteht. Dementsprechend wird ein Steuerbefehl an die Dialogeinrichtung 18 übermittelt, die an den Fahrer eine Fahrempfehlung ausgibt in der Art: "Zwei PKW passieren lassen. Danach Spurwechsel möglich".

## Patentansprüche

1. Lückenmelder für den Spurwechsel eines Kraftfahrzeugs auf einer mehrspurigen Straße mit einer Umfeldsensorik (10) zur Erfassung des Verkehrsumfelds einschließlich des Verkehrs auf wenigstens einer Nebenspur, einer Erkennungseinrichtung (12) zur Bestimmung von für einen Spurwechsel ausreichender Verkehrslücken, wobei die Umfeldsensorik (10) einen Entfernungsmesser, einen Längenmesser und einen Geschwindigkeitsmesser für sämtliche innerhalb eines begrenzten Abstandsbereichs ausgehend vom eigenen Kraftfahrzeug erfasste rückwärtige und seitliche fremde Kraftfahrzeuge auf der wenigstens einen Nebenspur umfasst, dass die Erkennungseinrichtung (12) durch Vergleich von Parametern der eigenen Geschwindigkeit sowie der Geschwindigkeiten der fremden Kraftfahrzeuge und deren Entfernungen vom eigenen Kraftfahrzeug mit Sollwerten aus der Menge Geschwindigkeit, Beschleunigungsvermögen, Fahrerreaktionszeit, Lückengröße, vorausschauend eine für einen Spurwechsel kommende ausreichende Lücke ermittelt und mittels einer Steuereinrichtung (20) Beschleunigungsbefehle an den Motor oder Verzögerungsbefehle an die Bremsanlage oder mittels einer Dialogeinrichtung (18) detaillierte Fahrhinweise an den Fahrer des eigenen Kraftfahrzeugs ausgibt,
**dadurch gekennzeichnet, dass** die Umfeldsensorik (10) als zusätzlich Parameter die Farben, Höhen und Längen der Kraftfahrzeuge an die Erkennungseinrichtung (12) übermittelt und die Erkennungseinrichtung (12) diese Parameter zur Klassifizierung der fremden Fahrzeuge ebenfalls auswertet und mittels der Dialogeinrichtung (18) zusammen mit den Fahrhinweisen Klassifizierungungsangaben der fremden Fahrzeuge als Identifizierungshilfe an den Fahrer des eigenen Kraftfahrzeugs ausgibt.

2. Lückenmelder nach Anspruch 1, **dadurch gekennzeichnet, dass** die Umfeldsensorik (10) als zusätzlich Parameter die Geschwindigkeit eines vorausfahrenden fremden Kraftfahrzeugs und dessen Entfernung vom eigenen Kraftfahrzeug an die Erkennungseinrichtung (12) übermittelt und die Erkennungseinrichtung (12) diese Parameter ebenfalls auswertet.

3. Lückenmelder nach einem der Ansprüche 1 bis 2, **dadurch gekennzeichnet, dass** eine zusätzliche Umweltsensorik (16) Parameter aus der Menge Temperatur, Niederschlag, Fahrbahnbelag an die Erkennungseinrichtung (12) übermittelt und die Erkennungseinrichtung (12) diese Parameter ebenfalls auswertet.

4. Lückenmelder nach einem der Ansprüche 1 bis 3, **dadurch gekennzeichnet, dass** die Erkennungseinrichtung (12) aus kontinuierlich ausgewerteten Parametern aus der Menge eigene Geschwindigkeit, Geschwindigkeit der fremden Kraftfahrzeuge und deren Entfernung vom eigenen Kraftfahrzeug, Geschwindigkeit eines vorausfahrenden fremden Kraftfahrzeugs und dessen Entfernung vom eigenen Kraftfahrzeug, Temperatur, Niederschlag, Fahrbahnbelag, eigenes bisheriges Beschleunigungs- und Bremsverhalten eine Vorausberechnung künftiger Lücken vornimmt.

5. Lückenmelder nach einem der Ansprüche 1 bis 4, **dadurch gekennzeichnet, dass** mittels der Dialogeinrichtung (18) Steuerbefehle zur manuellen oder selbstlernenden automatischen Änderung wenigstens eines Sollwertes eigenständig oder im Dialog mit automatisch erzeugten Vorgaben eingebbar sind.

6. Lückenmelder nach einem der Ansprüche 1 bis 5, **dadurch gekennzeichnet, dass** die Dialogeinrichtung (18) durch eine automatisch erkannte Fahraktion aus der Menge Blinker betätigen, Beschleunigen, Bremsen, Annäherung an ein vorausfahrendes Kraftfahrzeug aktivierbar ist.

## Claims

1. Gap indicator for lane changing of a motor vehicle on a multi-lane road, with a surrounding sensor system (10) for sensing the traffic surroundings including the traffic on at least one adjacent lane, and a detection device (12) for determining gaps in the traffic which is sufficient for lane changing, wherein the surrounding sensor system (10) comprises a distance meter, a length meter and a speed meter for all the other motor vehicles which are sensed to the rear and to the sides on the at least one adjacent lane within a limited distance area starting from the motor vehicle in question, in that the detection device (12) determines, in a predictive fashion, an upcoming gap which is sufficient for lane changing by comparing parameters of the speed of the motor vehicle in question and the speeds of the other motor vehicles and the distances thereof from the motor vehicle in question with setpoint values from the set comprising the speed, acceleration capability, driver reaction time and size of gap, and outputs, by means of a control device (20), acceleration instructions to the engine or deceleration instructions to the brake system, or detailed driving instructions to the driver of the motor vehicle in question by means of a dialogue device (18), **characterized in that** the surroundings sensor system (10) transfers, as additional parameters, the colours, height and lengths of the motor vehicles to the detection device (12), and the detection device (12) likewise evaluates these parameters in order to classify the other vehicles, and outputs, together with the driving instructions, classification information relating to the other vehicles as an identification aid to the driver of the motor vehicle in question by means of the dialogue device (18).

2. Gap indicator according to Claim 1, **characterized in that** the surrounding sensor system (10) transfers, as additional parameters, the speed of another motor vehicle travelling ahead and the distance thereof from the motor vehicle in question to the detection device (12), and the detection device (12) also evaluates these parameters.

3. Gap indicator according to one of Claims 1 to 2, **characterized in that** an additional surrounding sensor system (16) also evaluates parameters from the set comprising the temperature, precipitation, carriageway covering to the detection device (12), and the detection device (12) also evaluates these parameters.

4. Gap indicator according to one of Claims 1 to 3, **characterized in that** the detection device (12) calculates future gaps in advance on the basis of continuously evaluated parameters from the set comprising the speed of the motor vehicle in question, the speed of the other motor vehicles and the distance thereof from the motor vehicle in question, the speed of another motor vehicle travelling ahead and the distance thereof from the motor vehicle in question, the temperature, the precipitation, the carriageway covering, and the previous acceleration and the braking behaviour of the motor vehicle in question.

5. Gap indicator according to one of Claims 1 to 4, **characterized in that** control instructions for manual or self-learning automatic changing of at least one setpoint value can be input independently or in dialogue with automatically generated prescriptions by means of the dialogue device (18).

6. Gap indicator according to one of Claims 1 to 5, **characterized in that** the dialogue device (18) can be activated by means of an automatically detected driving action from the set comprising activation of flashing indicator lights, acceleration, braking, approaching a motor vehicle travelling ahead.

## Revendications

1. Dispositif de signalisation de la place disponible pour un changement de voie de circulation d'un véhicule automobile sur une route à plusieurs voies, qui présente
un ensemble (10) de détecteurs d'environnement qui détecte l'environnement de circulation, notamment le trafic sur au moins une voie latérale, et
un dispositif de reconnaissance (12) qui détermine dans le trafic la présence de places disponibles pour un changement de voie de circulation,
l'ensemble (10) de détecteurs d'environnement comprenant un dispositif de mesure d'éloignement, un dispositif de mesure de longueur et un dispositif de mesure de vitesse de tous les véhicules étrangers détectés en arrière et à côté du véhicule propre sur la ou les voies de circulation latérales à l'intérieur d'une plage de distance limitée centrée sur la véhicule propre,
le dispositif de reconnaissance (12) déterminant de manière prévisionnelle qu'une place suffisante se libèrera pour un changement de voie de circulation en comparant les paramètres de la vitesse propre ainsi que des vitesses des véhicules étrangers et de leur distance par rapport au véhicule propre à des valeurs de consigne de l'ensemble constitué de la vitesse, de la capacité d'accélération, du temps de réaction du conducteur et de la taille de la place disponible et délivrant au moyen d'un dispositif de commande (20) des ordres d'accélération au moteur ou des ordres de ralentissement à l'installation de freinage ou délivrant des indications détaillées de conduite au conducteur du véhicule propre au moyen d'un dispositif de dialogue (18),
**caractérisé en ce que**
l'ensemble (10) de détecteurs d'environnement transmet comme paramètre supplémentaire au dispositif de reconnaissance (12) la couleur, la hauteur et la longueur des véhicules et **en ce que** le dispositif de reconnaissance (12) évalue également ces paramètres pour classer les véhicules étrangers et délivre au conducteur du véhicule propre au moyen du dispositif de dialogue (18), en même temps que les indications de conduite, des données de classement des véhicules étrangers à titre d'assistance à l'identification.

2. Dispositif de signalisation de la place disponible selon la revendication 1, **caractérisé en ce que** le système (10) de détecteurs d'environnement transmet comme paramètre supplémentaire au dispositif de reconnaissance (12) la vitesse d'un véhicule étranger qui circule à l'avant du véhicule propre ainsi que la distance qui l'en sépare et **en ce que** le dispositif de reconnaissance (12) évalue également ces paramètres.

3. Dispositif de signalisation de la place disponible selon l'une des revendications 1 ou 2, **caractérisé en ce qu'**un système supplémentaire (16) de détecteurs d'environnement transmet au dispositif de reconnaissance (12) des paramètres de l'ensemble constitué de la température, des précipitations, de la nature de la couverture de la chaussée et **en ce que** le dispositif de reconnaissance (12) évalue également ces paramètres.

4. Dispositif de signalisation de la place disponible selon l'une des revendications 1 à 3, **caractérisé en ce qu'**à partir des paramètres évalués en continu de l'ensemble constitué de la vitesse propre, de la vitesse des véhicules étrangers et de leur distance par rapport au véhicule propre, de la vitesse d'un véhicule étranger circulant à l'avant du véhicule propre et de sa distance par rapport au véhicule propre, de la température, des précipitations, de la nature de la couverture de la chaussée et du comportement précédent d'accélération et de freinage du véhicule propre, le dispositif de reconnaissance (12) exécute un calcul préalable des places qui seront ultérieurement disponibles.

5. Dispositif de signalisation de la place disponible selon l'une des revendications 1 à 4, **caractérisé en ce qu'**au moyen du dispositif de dialogue (18), des ordres de commande en vue de modifier au moins une valeur de consigne manuellement, automatiquement avec auto-apprentissage et de manière autonome peuvent être introduits en dialogue avec des données formées automatiquement.

6. Dispositif de signalisation de la place disponible selon l'une des revendications 1 à 5, **caractérisé en ce que** le dispositif de dialogue (18) peut être activé par une action de conduite détectée automatiquement et sélectionnée dans l'ensemble constitué de l'actionnement des clignotants, de l'accélération, du freinage et de l'approche d'un véhicule qui circule à l'avant du véhicule propre.
